# EUROPEAN PATENT SPECIFICATION

(11) **EP 2 243 532 B1**
(45) Date of publication and mention of the grant of the patent: **16.11.2011**
(21) Application number: 10159531.2
(22) Date of filing: 09.04.2010
(51) Int. Cl.: B01D 35/16, B01D 35/30, B01D 46/10, B01D 46/00, A47L 9/14, B30B 9/02

(54) **Filter element with two telescoping housing elements for the compression of the filtered material**
Filterelement aus zwei zusammenschiebbaren Gehäuseteilen zur Verfestigung der gefilterten Substanz
Elément de filtre avec un boîtier telescopique composé de deux éléments pour la compression de la substance filtrée

(30) Priority: 24.04.2009 GB 0907015
(43) Date of publication of application: 27.10.2010
(73) Proprietor: Brentnall, Nicholas, Gloucestershire GL51 6QL (GB)
(72) Inventor: Brentnall, Nicholas, Gloucestershire GL51 6QL (GB)
(74) Representative: Jackson, Derek Charles

(56) References cited:
- EP-A1- 0 838 254
- EP-A1- 1 637 649
- EP-A2- 0 524 608
- DE-A1- 4 023 843
- DE-U1- 29 501 809
- GB-A- 2 033 779
- GB-A- 2 278 311
- GB-A- 2 347 613
- JP-A- 4 018 909
- JP-A- 11 033 868
- US-A- 2 800 072
- US-A- 4 371 376

## Description

This invention relates to a filter element for a vacuum cleaner and having a compressible housing.

Many vacuum cleaners incorporate filters which filter out dust from the air which has passed through a primary dust-collecting mechanism, such as a bag or a cyclone. The filter needs to be cleaned periodically, which involves removing the filter from the vacuum cleaner, removing dust from the filter, washing and drying it, and then re-assembling the filter within the vacuum cleaner. This is a complex procedure for the user of the vacuum cleaner to undertake and it is desirable to simplify the cleaning of the filter.

For vacuum cleaners which employ bags or the like as the primary dust-collecting mechanism, the bag or the like needs to be emptied at regular intervals as it fills with dust. The dust is often only loosely packed, because the compressive force on the dust is only the air passing through the bag or the like. It would be useful to be able to increase the dust-collecting capacity of a vacuum cleaner by providing a bag or the like in which the collected dust can be more effectively compressed.

It is therefore an object of the present invention to provide a filter element with a compressible housing and which overcomes or at least ameliorates one or more of the abovementioned disadvantages.

According to the present invention there is provided a filter element for a vacuum cleaner, the filter element comprising first and second housing components slidable relative to each other and defining a filter chamber therewithin, an inlet for air to be filtered provided in at least one of the first and second housing components, and a filtering material within the filter chamber, wherein the filtering material is adapted to provide a space between the inlet and the filtering material for the accumulation of solid material in the air to be filtered, whereby sliding movement between the first and second housing components causes the volume of the filter chamber to vary and wherein the first and second housing components are provided with perforations for the exit of filtered air from the filter element.

The inlet may extend into the filter chamber. The inlet may be provided with perforations for the passage of air into the filter chamber. An inlet may be provided at opposite ends of the filter element.

Perforations are preferably not provided in the first and/or second filter housings in the region of the space.

A plurality of filtering material bodies may be provided within the filter chamber.

The space may extend substantially across the entire cross-section of the filter chamber.

A seal may be provided between the first and second housing components.

The first and second housing components may be interconnected by way of a screw thread.

Biasing means, such as a coil spring, may be provided to urge the first and second housing components to an expanded configuration of the filter element.

For a better understanding of the present invention and to show more clearly how it may be carried into effect reference will now be made, by way of example, to the accompanying drawings in which:
Figure 1 is a perspective view of one embodiment of a filter element according to the present invention;
Figure 2 is a sectional view of the filter element shown in Figure 1 in an expanded configuration;
Figure 3 is a sectional view of the filter element shown in Figure 1 in a compressed configuration;
Figure 4 is a diagrammatic sectional view showing a seal between first and second housing components of the filter element shown in Figure 1; and
Figure 5 shows the filter element of Figures 1 to 4 provided with biasing means.

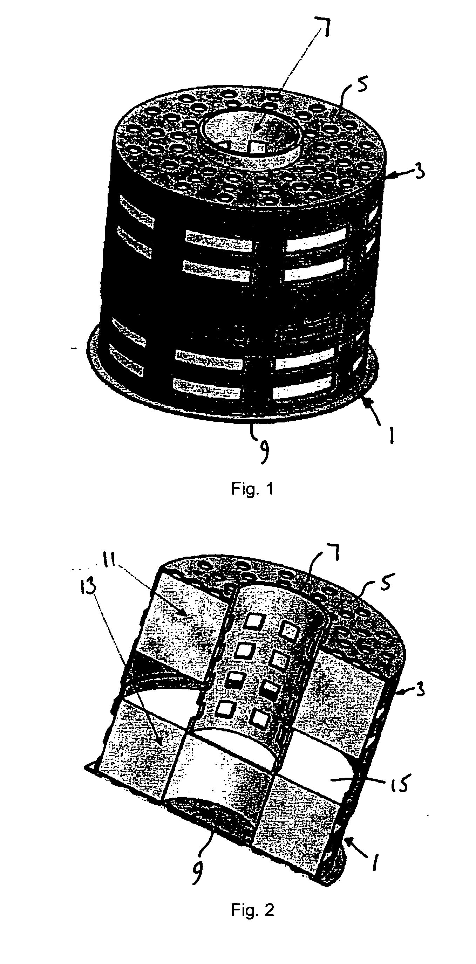

The filter element shown in Figures 1 to 4 comprises a first housing component 1 and a second housing component 3 which has an internal dimension slightly larger than the external dimension of the first housing component. Thus the second housing component 3 fits over the first housing component 1 and is movable, in particular slidable, relative thereto, the first and second housing components defining a filter chamber therewithin, the volume of which is variable as a result of movement between the housing components. The second housing component 3 has a closed end 5 in the region thereof remote from the first housing component 1 and an inlet 7, for example in the form of a tube, extends into the filter element through the closed end of the second housing component. The first housing component 1 also has a closed end 9 in the region thereof remote from the second housing component. The closed end and side walls of the first housing component are perforated to allow the passage of air therethrough. Similarly, the closed end and side walls of the second housing component are also perforated to allow the passage of air. The inlet 7 in the illustrated embodiment has a closed end within the chamber formed by the housing components while the side wall of the inlet within the chamber is perforated to allow the passage of air into the chamber.

One or more filtering material bodies 11, 13 (two filtering material bodies being shown) are mounted within the filter chamber formed by the two housing components 1, 3, the filtering material bodies each being formed with an aperture therethrough to allow the passage of the inlet. The filtering material bodies may be, for example, made of conventional foam material and/or nonwoven material. The filtering material does not entirely fill the filter chamber formed by the two housing components 1, 3 in the expanded configuration of the filter element as shown in Figure 2, but are dimensioned to provide a space 15 within the filter chamber and extending substantially across the entire cross-sectional area of the chamber. The perforations in the first and/or second housing components 1, 3 are arranged such that there are no perforations in the region of the space 15.

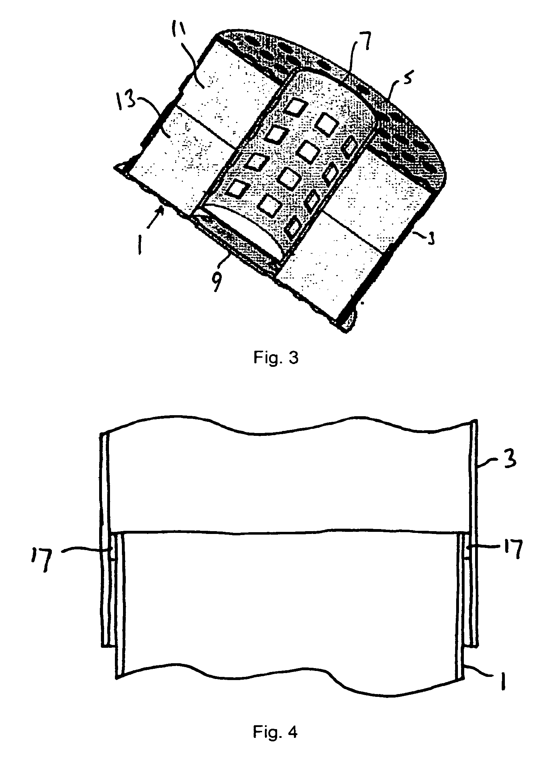

A seal 17, shown diagrammatically in Figure 4, is provided between the first and second housing components 1, 3. As illustrated, the seal may be provided on the first housing component, but alternatively the seal may be provided on the second housing component or seals may be provided on both the first and second housing components 1, 3. The at least one seal substantially eliminates any leakage which might otherwise occur between the first and second housing components.

Consequently, air flow through the filter element is from the inlet 7 into one or more of the filtering material bodies 11, 13 (only the filtering material body 11 as illustrated) and/or into the space 15, from where the air must pass through one or both filtering material bodies 11, 13 to reach the perforations in the first and/or second housing component and to exit the filter element.

As illustrated, the first and second housing components 1, 3 are substantially cylindrical with the inlet 7 in the form of a tube of circular cross section extending substantially along the axis of the second housing component. The filtering material bodies 11, 13 are annular in cross section, as is the space 15. However, the filter element may have any convenient configuration depending, for example, on the cross-section of an apparatus into which it is to be used. For example, the filter element may be square or trapezoidal in configuration.

In use of the filter element according to the present invention as shown in Figures 1 to 4, air passes into the filter element by way of the inlet 7. Air then disperses from the inlet into the filtering material bodies 11 and 13 and into the space 15 and passes out of the filter element through the perforations in the first and second housing components 1, 3. Solid material in the air is trapped in the filtering material 11, 13 and in the space 15.

After a period of use, solid material builds up in the filtering material 11, 13 and in the space 15 and the filter element may be treated in different ways depending on the extent and nature of the solid material.

Where the solid material is primarily in the space 15 and is compressible, the filter element can be removed from where it is being used, for example in an appliance such as a vacuum cleaner, and the first and second housing components can be moved together (manually with the filter element shown in Figures 1 to 4) to move the filtering material bodies 11, 13 together and therefore to reduce the size of the space 15. This has the effect of compressing the solid material within the space thus creating more room for further solid material. The housing components 1, 3 can then be returned to their original configuration and the filter element can be replaced so as to accumulate further solid material.

Alternatively, where the solid material requires to be removed from the filtering material 11, 13 and the space 15, the filter element is removed from where it is being used and washed in a suitable substance (for example, soapy water) to remove the solid material. The filtering material 11, 13 can then be at least partly dried by compressing the filter element to compress, in turn, the filtering material 11, 13 and to squeeze at least a part of the washing substance from the filtering material bodies. If necessary, the filter element can then be fully dried before being replaced so as to accumulate fresh solid material.

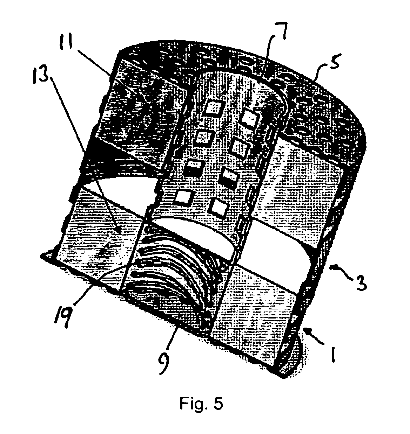

It should be noted that the filter element of Figures 1 to 4 can be modified in a number of ways. For example, only a single filtering material body can be provided, the space 15 being provide in the pathway between the inlet 7 and the filtering material. The first and second housing components 1, 3 may be interconnected by way of a screw thread such that manually rotating one of the housing components relative to the other causes axial movement resulting in compression of the contents of the filter chamber within the housing when rotated in one direction and restoration to the original configuration when rotated in the other direction. Alternatively or additionally, as illustrated in Figure 5, biasing means such as a spring 19, in particular a coil spring, may be provided within the filter element and acting between the first and second housing components 1, 3 (for example by way of inlet 7 as illustrated in Figure 5) so as to bias the filter element towards its original, expanded configuration after it has been compressed. Although the figures only illustrate an inlet at one end of the filter element, clearly an inlet can be provided at opposite ends of the filter element if desired.

As a further modification, the filter element may be washed and dried without being removed from its operating location. In such a case, a suitable cleaning fluid is passed through the filter element by way of suitable valved conduits to remove the solid material and means, such as a threaded rotating member engaging with one of the housing components, is provided to move the housing components 1, 3 together and apart so as to cause the filter element to compress and subsequently expand so as to squeeze any cleaning fluid out of the filtering material.

## Claims

1. A filter element for a vacuum cleaner, the filter element comprising first and second housing components (1, 3) slidable relative to each other and defining a filter chamber therewithin, an inlet (7) for air to be filtered provided in at least one of the first and second housing components, and a filtering material (11, 13) within the filter chamber, wherein the filtering material is adapted to provide a space (15) between the inlet and the filtering material for the accumulation of solid material in the air to be filtered, whereby sliding movement between the first and second housing components causes the volume of the filter chamber to vary, and wherein the first and second housing components (1, 3) are provided with perforations for the exit of filtered air from the filter element.

2. A filter element as claimed in claim 1, wherein the inlet (7) extends into the filter chamber.

3. A filter element as claimed in claim 1 or 2, wherein the inlet (7) is provided with perforations for the passage of air into the filter chamber.

4. A filter element as claimed in any preceding claim, wherein an inlet (7) is provided at opposite ends of the filter element.

5. A filter element as claimed in any preceding claim, wherein perforations are not provided in the first and/or second filter housings (1, 3) in the region of the space (15).

6. A filter element as claimed in any preceding claim, wherein a plurality of filtering material bodies (11, 13) are provided within the filter chamber.

7. A filter element as claimed in any preceding claim, wherein the space (15) extends substantially across the entire cross-section of the filter chamber.

8. A filter element as claimed in any preceding claim, wherein a seal (17) is provided between the first and second housing components (1, 3).

9. A filter element as claimed in any preceding claim, wherein the first and second housing components (1, 3) are interconnected by way of a screw thread.

10. A filter element as claimed in any preceding claim, wherein biasing means (19) is provided to urge the first and second housing components (1, 3) to an expanded configuration of the filter element.

11. A filter element as claimed in claim 10, wherein the biasing means comprises a coil spring (19).

## Patentansprüche

1. Filterelement für einen Staubsauger, wobei das Filterelement einen ersten und einen zweiten Gehäuseteil (1, 3), die relativ zueinander verschiebbar sind und darin eine Filterkammer definieren, einen in dem ersten und/oder dem zweiten Gehäuseteil bereitgestellten Einlass (7) für zu filternde Luft und ein Filtermaterial (11, 13) in der Filterkammer umfasst, wobei das Filtermaterial zum Bereitstellen eines Zwischenraums (15) zwischen dem Einlass und dem Filtermaterial zur Ansammlung von Feststoffen in der zu filternden Luft ausgeführt ist, wodurch die Verschiebebewegung zwischen dem ersten und dem zweiten Gehäuseteil verursacht, dass das Volumen der Kammer variiert, und wobei das erste und das zweite Gehäuseteil (1, 3) mit Perforationen für den Austritt gefilterter Luft aus dem Filterelement versehen sind.

2. Filterelement nach Anspruch 1, wobei der Einlass (7) sich in die Filterkammer erstreckt.

3. Filterelement nach Anspruch 1 oder 2, wobei der Einlass (7) mit Perforationen für das Hindurchströmen von Luft in die Filterkammer versehen ist.

4. Filterelement nach einem der vorhergehenden Ansprüche, wobei an entgegengesetzten Enden des Filterelements ein Einlass (7) bereitgestellt ist.

5. Filterelement nach einem der vorhergehenden Ansprüche, wobei in dem ersten und/oder dem zweiten Filtergehäuse (1, 3) im Bereich des Zwischenraums (15) keine Perforationen bereitgestellt sind.

6. Filterelement nach einem der vorhergehenden Ansprüche, wobei in der Filterkammer eine Vielzahl von Filtermaterialkörpern (11, 13) bereitgestellt ist.

7. Filterelement nach einem der vorhergehenden Ansprüche, wobei der Zwischenraum (15) sich im Wesentlichen über den gesamten Querschnitt der Filterkammer erstreckt.

8. Filterelement nach einem der vorhergehenden Ansprüche, wobei zwischen dem ersten und dem zweiten Gehäuseteil (1, 3) eine Dichtung (17) bereitgestellt ist.

9. Filterelement nach einem der vorhergehenden Ansprüche, wobei das erste und das zweite Gehäuseteil (1, 3) durch ein Schraubgewinde miteinander verbunden sind.

10. Filterelement nach einem der vorhergehenden Ansprüche, wobei ein Vorspannmittel (19) bereitgestellt ist, um das erste und das zweite Gehäuseteil (1, 3) auf eine ausgedehnte Konfiguration des Filterelements zu drängen.

11. Filterelement nach Anspruch 10, wobei das Vorspannmittel eine Schraubenfeder (19) umfasst.

## Revendications

1. Elément filtrant pour aspirateur à poussière, l'élément filtrant comportant des premier et deuxième composants de logement (1, 3) pouvant coulisser l'un par rapport à l'autre et définissant à l'intérieur une chambre de filtre, une entrée (7) pour l'air à filtrer prévue dans au moins l'un des premier et deuxième composants de logement, et un matériau filtrant (11, 13) dans la chambre de filtre, dans lequel le matériau filtrant est adapté pour fournir un espace (15) entre l'entrée et le matériau filtrant pour l'accumulation de matières solides dans l'air à filtrer, grâce à quoi le mouvement coulissant entre les premier et deuxième composants de logement fait varier le volume de la chambre de filtre, et dans lequel les premier et deuxième composants de logement (1, 3) sont munis de perforation pour permettre à l'air filtré de sortir de l'élément filtrant.

2. Elément filtrant selon la revendication 1, dans lequel l'entrée (7) se prolonge dans la chambre de filtre.

3. Elément filtrant selon la revendication 1 ou 2, dans lequel l'entrée (7) est munie de perforations pour le passage de l'air dans la chambre de filtre.

4. Elément filtrant selon l'une quelconque des revendications précédentes, dans lequel une entrée (7) est prévue à des extrémités opposées de l'élément filtrant.

5. Elément filtrant selon l'une quelconque des revendications précédentes, dans lequel des perforations ne sont pas prévues dans les premier et/ou deuxième logements de filtre (1, 3) dans la zone de l'espace (15).

6. Elément filtrant selon l'une quelconque des revendications précédentes, dans lequel une pluralité de corps de matériau filtrant (11, 13) sont prévus dans la chambre de filtre.

7. Elément filtrant selon l'une quelconque des revendications précédentes, dans lequel l'espace (15) se prolonge essentiellement à travers toute la section transversale de la chambre de filtre.

8. Elément filtrant selon l'une quelconque des revendications précédentes, dans lequel un joint (17) est prévu entre les premier et deuxième composants de logement (1, 3).

9. Elément filtrant selon l'une quelconque des revendications précédentes, dans lequel les premier et deuxième composants de logement (1, 3) sont reliés au moyen d'un filetage.

10. Elément filtrant selon l'une quelconque des revendications précédentes, dans lequel un moyen de poussée (19) est prévu pour amener les premier et deuxième composants de logement (1, 3) à une configuration déployée de l'élément filtrant.

11. Elément filtrant selon la revendication 10, dans lequel le moyen de poussée est constitué d'un ressort hélicoïdal (19).
